# FASCICULE DE BREVET EUROPEEN

(11) **EP 0 493 358 B1**
(45) Date de publication et mention de la délivrance du brevet: **26.04.1995**
(21) Numéro de dépôt: 91870217.6
(22) Date de dépôt: 23.12.1991
(51) Int. Cl.: A01K 23/00, A61D 9/00, A61F 13/15

(54) **Couche jetable pour petits animaux domestiques**
Wegwerfbare Windel für kleine Haustieren
Disposable diaper for small pets

(30) Priorité: 24.12.1990 BE 9001239
(43) Date de publication de la demande: 01.07.1992
(73) Titulaire: ROER N.V., B-3390 Tielt-Winge (BE)
(72) Inventeur: Eraly, Paul, B-3210 Lubbeek (BE)
(74) Mandataire: Pieraerts, Jacques

(56) Documents cités:
- GB-A- 2 111 836
- US-A- 3 211 132
- US-A- 4 527 991
- US-A- 4 813 949
- US-A- 4 917 683

## Description

Cette invention concerne une couche jetable pour petits animaux domestiques, formée par un matériau laminaire constitué d'une couche de matière absorbante ayant une grande capacité d'absorption, comprise entre une couche extérieure en matière étanche et une couche d'enveloppe en une matière absorbante, ledit matériau laminaire étant découpé pour former une partie centrale ayant à une extrémité deux ailes qui s'étendent de façon perpendiculaire sur ladite partie centrale, lesdites ailes pouvant être reliées entre elles autour du ventre de l'animal et à l'extrémité opposée deux bandes qui s'étendent longitudinalement par rapport à la partie centrale, lesdites bandes venant se loger, lors de l'emploi de la couche, de part et d'autre de la queue de l'animal et étant pourvues de moyens de fixation avec lesquels lesdites bandes peuvent être reliées auxdites ailes dans la position fermée de ces bandes, tandis qu'entre lesdites bandes qui s'étendent longitudinalement à l'endroit où ces dernières sont reliées à la partie centrale est prévue une partie élastique agencée pour guider les excréments de l'animal vers l'espace dans la couche jetable qui, lors de l'utilisation de la couche, est créé sous l'animal.

De très nombreux animaux domestiques, en particulier les chiens, font tout simplement leurs besoins sur la rue, sur la plage, sur des pelouses et des chemins de promenade de parcs publics et autres. A cette situation on n'a pas trouvé jusqu'à présent de solution adéquate. Maintenant que les petits animaux domestiques, tels que les chiens et les chats, sont tellement intégrés dans la vie quotidienne de l'homme moderne, la nécessité d'une solution hygiénique à ce fléau s'impose d'autant plus.

A la multitude de problèmes qui y sont liés, on n'a pas trouvé de solution adéquate parce que l'on ne peut pas perdre de vue que capter les excréments doit se faire de telle manière que les animaux n'en subissent aucun inconvénient, en particulier que les animaux ne se salissent pas par la capture des excréments. En même temps, la personne qui évacuera la couche jetable suivant l'invention doit pouvoir le faire de façon hygiénique et propre.

Beaucoup de solutions adéquates ne semblent jusqu'à présent pas encore été inventées parce que, malgré la nécessité croissante, une solution adéquate au problème n'a pas été trouvée.

Dans la littérature des brevets, deux documents sont connus, notamment le brevet US-A-4,813,949 et le brevet GB-A-2.111.836.

Suivant le premier document cité, on évacue en générale uniquement un petit coussin interne, mais l'utilisateur ne peut, dans beaucoup de cas, accomplir ceci sans encourir le risque de se salir les doigts. Ici également les excréments saliront l'animal même, ce qui entraînera donc que deux points essentiels du problème posé ne sont pas résolus.

Le brevet anglais 2.111.836 ne se réfère qu'à un "napkin". La combinaison des caractéristiques ne suggère également pas la solution recherchée qui consiste à créer suffisamment d'espace sous l'anus et en partie le ventre de l'animal afin de capter de façon hygiénique et propre les excréments de l'animal.

L'invention a donc pour but de développer une couche jetable pour petits animaux domestiques qui apporte une solution à ces problèmes, ne cause pas d'ennuis aux animaux et offre aux propriétaires de ces animaux la possibilité d'appliquer facilement à l'animal et d'évacuer rapidement et sans effort particulier la couche jetable.

Une couche jetable suivant l'invention est étudiée de telle façon qu'elle peut également servir de service hygiénique pour des animaux domestiques ainsi que de serviettes d'enveloppe lors d'opération effectuées par des vétérinaires aux alentours du ventre inférieur. Cette couche jetable peut également être utilisée comme moyen préventif qui n'est pas un médicament.

Pour réaliser cela conformément à l'invention, ladite partie élastique est formée en un matériau élastique et lisse.

Avantageusement, dans le sens de la longueur, de part et d'autre de la couche de pulpe, au moins un, mais de préférence plusieurs élastiques sont compris entre la couche d'enveloppe et la couche étanche.

D'autres détails et particularités de l'invention ressortiront de la description donnée d'une couche jetable suivant l'invention. Cette description est donnée uniquement à titre d'exemple.

Les références se rapportent aux dessins annexés.

La figure 1 est une vue de dessus sur la face extérieure d'une couche jetable suivant l'invention et dans laquelle tous les composants sont visibles.

La figure 2 est une vue de dessus de la face intérieure de cette même couche jetable dans laquelle tous les composants sont visibles.

La figure 3 est une représentation tridimentionnelle à échelle réduite, de la couche jetable en position d'utilisation.

La figure 4 est une coupe, à échelle agrandie, suivant la ligne IV-IV de la figure 1.

D'une part, la couche jetable représentée aux dessins est constituée d'un matériau laminaire. D'autre part, la couche est conçue de telle façon qu'elle s'applique étroitement autour du ventre inférieur et du dos de l'animal sans gêner ce dernier.

La couche jetable est constituée d'une partie centrale 1 avec à une extrémité une partie supérieure 1' qui comporte des deux côtés deux ailes 2 qui sont pourvues de moyens pour relier entre elles leurs extrémités après que lesdites ailes ont été appliquées autour de l'animal. Ces moyens consistent par exemple de bandes adhésives 3.

A l'extrémité opposée de la partie centrale 1, s'étendent, dans la direction longitudinale, deux bandes 4 qui, sont pourvues de bandes adhésives 5 à leurs extrémités. Entre ces deux bandes 4, il est prévu un espace 6 longitudinal qui, en fonction des dimensions de l'animal, doit offrir de la place à la queue.

Lors de l'utilisation, chacune des deux bandes 3 viennent s'appliquer dans le dos de l'animal et les bandelettes adhésives 5 rejoignent une bande adhésive 5' supérieure qui s'étend en travers et qui fait partie de la partie supérieure 1' et des deux ailes 2. A ce moment, les deux ailes 2 sont bien entendu collées l'une à l'autre.

Entre les bandes 4 là où elles passent à la partie centrale 1, il est prévu un morceau élastique 7 qui offre la possibilité que les excréments parviennent dans la couche. Ce composant est constitué de matière légèrement élastique et doit être aussi lisse que possible afin que les excréments puissent facilement glisser sous la queue de l'animal vers cet endroit de la couche où une certaine cavité est créée afin que les excréments ne puissent pas s'appuyer contre l'animal.

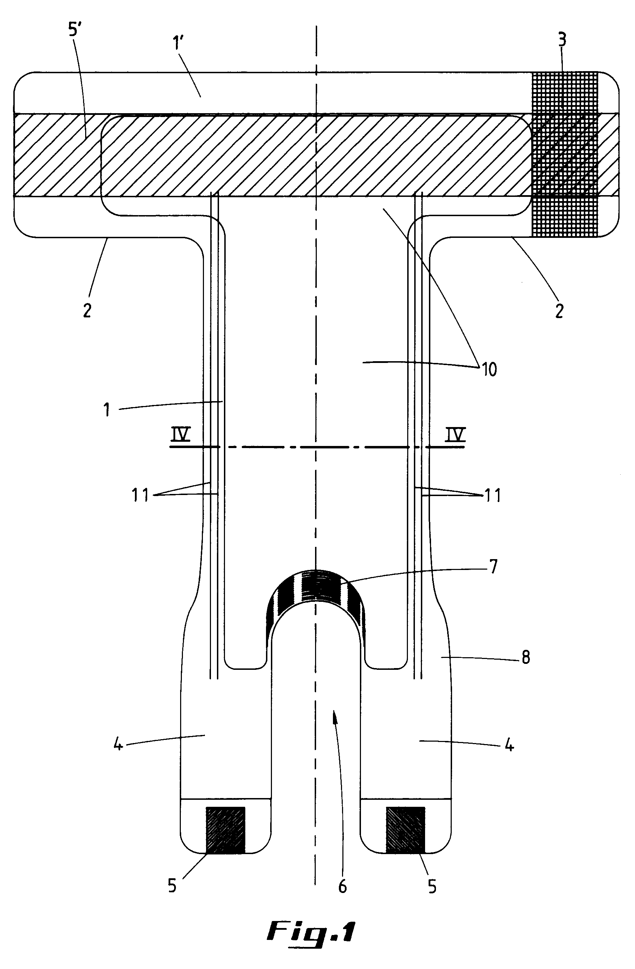

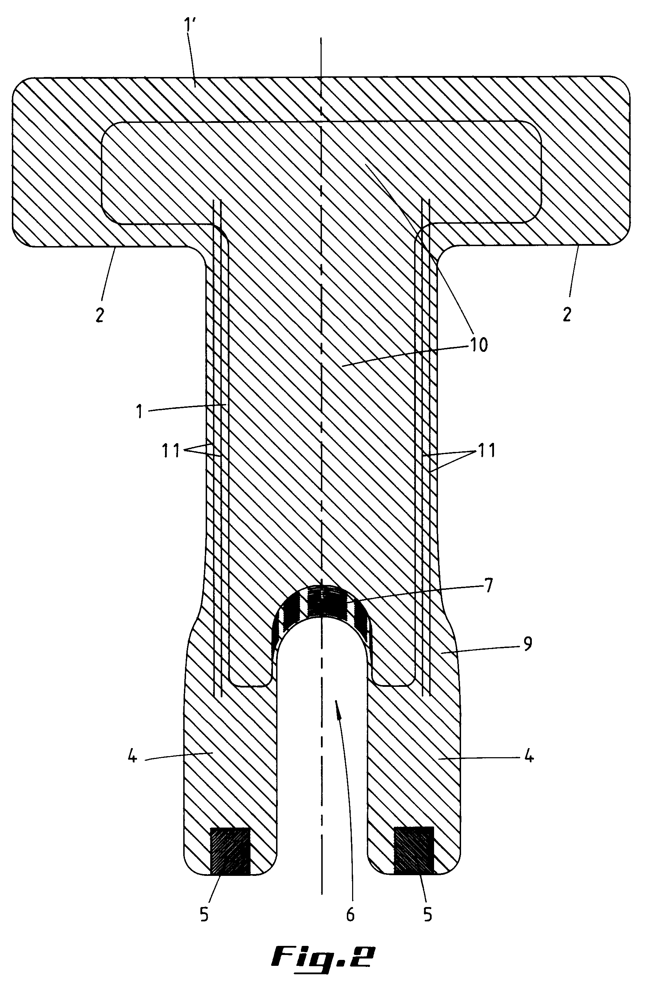

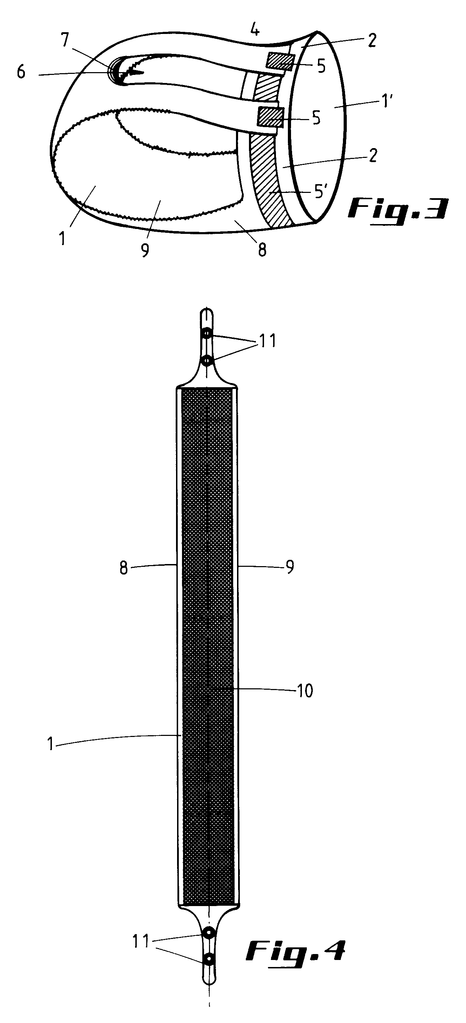

Lorsqu'on considère aussi bien les figures 1 et 2 que la coupe suivant la figure 4, on s'aperçoit que la matière laminaire dans laquelle est découpée la couche jetable est constituée sur toute sa surface d'une couche étanche 8. Cette couche étanche forme ledit côté extérieur de la couche.

Le long du côté intérieur, la couche est constituée, également sur toute sa superficie, d'une fine couche d'enveloppe absorbante 9 qui est reliée à la couche étanche 8 le long du bord.

Dans la partie centrale 1 et dans une partie des ailes 2, une couche relativement épaisse permettant l'absorption d'urine est appliquée. Cette dite couche de pulpe porte la référence 10. Elle est essentielle pour assurer une capacité d'absorption aussi grande que possible de la couche jetable aussi grande que possible. De part et d'autre de la couche de pulpe s'étendent un ou plusieurs élastiques 11 qui, lors de la production de la couche, sont compris entre une fine couche 9 d'enveloppe absorbante du côté intérieur et une couche 8 absorbante du côté extérieur.

Les élastiques 11 assurent que la couche, dans sa position d'utilisation, vienne se loger tout près du corps de l'animal et qu'ainsi se forme du côté intérieur l'espace dont mention a été faite au préalable. Ceci est une caractéristique essentielle de la couche jetable suivant l'invention. Conjointement à la présence de la partie 7 élastique le long de laquelle les excréments peuvent glisser, la présence de ces deux rangées d'élastiques est déterminante pour résoudre les problèmes clairement soulevés dans le préambule, à savoir la capture des excréments dans des circonstances qui soient tant pour l'animal que pour l'utilisateur les plus hygiéniques.

La liaison entre eux des bords de la couche 9 d'enveloppe et de la fine couche 8 étanche ainsi que le fait de garder entre ces deux couches des élastiques 11 est un problème qui peut être solutionné sans peine par des techniques généralement connues.

La couche 9 d'enveloppe, la couche étanche 8 et la couche de pulpe 10 et le dessin général de la couche jetable en tant que tels devront être adaptés à l'anatomie de l'animal.

La couche 9 absorbante et la couche 8 étanche montrent les mêmes dimensions et sont bien entendu toujours plus grandes que la couche de pulpe qui est comprise entre ces deux couches.

Sur la figure 3 est représentée une couche jetable dans la position d'utilisation à partir de laquelle on peut déduire qu'il est facile de l'appliquer à l'animal ainsi que de la lui enlever.

De la description qui vient d'être donnée d'une couche jetable suivant l'invention, il apparaît très clairement que cette dernière peut facilement être adaptée au ventre inférieur et aux parties du dos de l'animal et que celui-ci ne sera pas gêné par cette couche. Aux propriétaire d'animaux domestiques, il ne faudra désormais plus qu'un petit effort pour appliquer à leurs animaux un moyen pratique afin que les chemins de promenade, les pelouses, les plages et autres puissent rester propres.

L'invention n'est pas limitée à la description donnée ci-dessus et de nombreuses modifications peuvent y être apportées sans pour autant sortir du cadre de la présente demande de brevet.

## Revendications

1. Couche jetable pour petits animaux domestiques, formée par un matériau laminaire constitué d'une couche de matière absorbante ayant une grande capacité d'absorption, comprise entre une couche extérieure en matière étanche et une couche d'enveloppe en une matière absorbante, ledit matériau laminaire étant découpé pour former une partie centrale ayant à une extrémité deux ailes qui s'étendent de façon perpendiculaire sur ladite partie centrale, lesdites ailes pouvant être reliées entre elles autour du ventre de l'animal et à l'extrémité opposée deux bandes qui s'étendent longitudinalement par rapport à la partie centrale, lesdites bandes venant se loger, lors de l'emploi de la couche, de part et d'autre de la queue de l'animal et étant pourvues de moyens de fixation avec lesquels lesdites bandes peuvent être reliées auxdites ailes dans la position fermée de ces bandes, tandis qu'entre lesdites bandes qui s'étendent longitudinalement à l'endroit où ces dernières sont reliées à la partie centrale est prévue une partie élastique agencée pour guider les excréments de l'animal vers l'espace dans la couche jetable qui, lors de l'utilisation de la couche, est créé sous l'animal, caractérisée en ce que ladite partie (7) élastique est formée en un matériau élastique et lisse.

2. Couche jetable suivant la revendication 1, caractérisée en ce que, dans le sens de la longueur, de part et d'autre de la couche (10) de pulpe, au moins un, mais de préférence plusieurs élastiques (11) sont compris entre la couche (4) d'enveloppe et la couche (8) étanche.

## Claims

1. Disposable diaper for small domestic animals, formed from a laminar material, consisting in a layer of highly absorbent material, enclosed between a waterproof external layer and an absorbent internal covering layer, the said laminar material being cut in such a way as to form a central part which has, at one end, two wings which extend at right angles to the said central part, and which can be joined together around the stomach of the animal, and, at the other end, two bands which extend lengthwise in relation to the central part, the said bands being placed on both sides of the animal's tail when the diaper is in use, and being equipped with fasteners with which the said bands may be joined to the said wings, when the bands are in the closed position. Between the said bands, which extend lengthwise to the point where they are joined to the central part, there is an elastic piece designed to channel the animal's excrement down to the space created under the animal in the disposable diaper when it is in use, characterized in that the said elastic part (7) is formed from a smooth, elastic material.

2. Disposable diaper as claimed in claim 1, characterized in that at least one, but preferably several elastic bands (11) are included lengthways along both sides of the layer of pulp (10), between the covering layer (4) and the waterproof layer (8).

## Patentansprüche

1. Wegwerfwindel für kleine Haustiere aus mehrlagigem Material, das aus einer Lage saugfähigen Materials mit hoher Aufnahmefähigkeit besteht, das zwischen einer äußeren Lage wasserdichten Materials und einer umhüllenden Lage eines absorbierenden Materials angeordnet ist, wobei dieses mehrlagige Material so zugeschnitten ist, daß ein Mittelteil gebildet wird, das an einem Ende zwei Flügel besitzt, die im rechten Winkel vom Mittelteil abgehen und um den Bauch des Tieres herum miteinander verbunden werden können, und das an seinem entgegengesetzten Ende zwei in der Längsrichtung des Mittelteils ausgerichtete Bänder aufweist, die bei der Benutzung der Windel beiderseits des Schwanzes des Tieres zu liegen kommen und die mit Befestigungsmitteln versehen sind, mit denen sie in geschlossener Position mit den Flügeln verbunden werden können, während zwischen diesen Bändern, die in Längsrichtung zu der Stelle verlaufen, an der sie am Mittelteil befestigt sind, ein elastisches Teil vorhanden ist, das so geformt ist, daß es die Exkremente des Tieres in den Raum in der Wegwerfwindel leitet, der bei der Benutzung der Windel unter dem Tier entsteht, dadurch gekennzeichnet, daß der elastische Teil (7) aus einem elastischen und glatten Material besteht.

2. Wegwerfwindel gemäß Anspruch 1, dadurch gekennzeichnet, daß in Längsrichtung beiderseits der Kernlage (10) mindestens ein, aber vorzugsweise mehrere Gummibänder (11) zwischen der umhüllenden Lage (4) und der wasserdichten Lage (8) enthalten sind.
